**Europäisches Patentamt**

**European Patent Office**

**Office européen des brevets**

(19)

(11) Veröffentlichungsnummer : **0 405 095 B1**

(12) **EUROPÄISCHE PATENTSCHRIFT**

(45) Veröffentlichungstag der Patentschrift :
03.11.93 Patentblatt 93/44

(51) Int. Cl.⁵ : **C04B 41/71,** C04B 41/49,
C08G 77/30

(21) Anmeldenummer : **90108355.0**

(22) Anmeldetag : **03.05.90**

(54) **Verfahren zur Verstärkung des Haftens von polymeren Stoffen an inorganischen Carbonatoberflächen.**

Die Akte enthält technische Angaben, die nach dem Eingang der Anmeldung eingereicht wurden und die nicht in dieser Patentschrift enthalten sind.

(30) Priorität : **05.05.89 DE 3914874**

(43) Veröffentlichungstag der Anmeldung :
**02.01.91 Patentblatt 91/01**

(45) Bekanntmachung des Hinweises auf die Patenterteilung :
**03.11.93 Patentblatt 93/44**

(84) Benannte Vertragsstaaten :
**CH DE FR GB IT LI**

(56) Entgegenhaltungen :
EP-A- 0 146 995
EP-A- 0 153 500
EP-A- 0 246 651

(56) Entgegenhaltungen :
EP-A- 0 285 092
GB-A- 1 424 529
GB-A- 1 604 360
NL-A- 7 711 951
US-A- 3 382 083

(73) Patentinhaber : **WACKER-CHEMIE GMBH**
**Hanns-Seidel-Platz 4**
**D-81737 München (DE)**

(72) Erfinder : **Eck, Herbert, Dr., Dipl.-Chem.**
**Burg 11**
**D-8263 Burghausen (DE)**
Erfinder : **Fleischmann, Gerald, Dr., Dipl.-Chem.**
**Carl-Bosch-Strasse 3**
**D-8263 Burghausen (DE)**
Erfinder : **Höhl, Horst**
**Zielstattstrasse 107**
**D-8000 München 70 (DE)**
Erfinder : **Weber, Helmut, Dr., Dipl.-Chem.**
**Sarreiterweg 38**
**D-8017 Ebersberg (DE)**

## Beschreibung

Verfahren zur Verstärkung des Haftens von polymeren Stoffen, die aus organischen Gruppen aufgebaut sind, auf Erdalkalicarbonat enthaltenden Oberflächen, wobei bevor polymerer Stoff der vorstehend definierten Art in Berührung mit der Erdalkalicarbonat enthaltenden Oberfläche, auf der er stärker haften soll, gebracht wird, auf diese Erdalkalioberfläche eine Lösung von Phosphor enthaltender Organosiliciumverbindung aufgetragen und dann das Lösungsmittel entfernt wird, sind bereits bekannte. Hierzu wird z.B. auf GB-PS 1 424 529 (ausgegeben 11. Februar 1976, Dynamit Nobel Aktiengesellschaft) verwiesen.

Daneben sind gemäß EP-A-246 651 Beschichtüngsmassen auf Basis von organopolysiloxan bekannt, die als haftvermittelnde Komponente Phosphorsäure-Silylester aufweisen.

Es bestand nun die Aufgabe, unter Verwendung von verhältnismäßig leicht zugänglichen und verhältnismäßig wenig toxischen Stoffen, das Haften von polymeren Stoffen, die organische Gruppen enthalten oder aus solchen Gruppen aufgebaut sind, bzw. von organische Gruppen enthaltenden Stoffen, die zu Polymeren vernetzbar sind, auf anorganisches Carbonat, insbesondere Erdalkalicarbonat, enthaltenden Oberflächen zu verstärken, wobei bevor polymerer bzw. zu Polymer vernetzbarer Stoff der vorstehend definierten Art in Berührung mit der anorganisches Carbonat enthaltende Oberfläche, auf der er stärker haften soll, gebracht wird, auf diese anorganisches Carbonat enthaltende Oberfläche eine Lösung von Phosphor enthaltender Organosiliciumverbindung aufgetragen und dann das Lösungsmittel entfernt wird und wobei Glanz und Glätte von solche Eigenschaften aufweisenden anorganisches Carbonat enthaltende Oberflächen nicht beeinträchtigt werden und die Verstärkung des Haftens der polymeren Stoffe auf den anorganisches Carbonat enthaltende Oberflächen teilweise auch bei Einwirkung von Schwefeldioxid und Wasser auf die mit dem polymeren Stoff überzogenen Oberflächen erhalten bleibt. Diese Aufgabe wird durch die Erfindung gelöst.

Gegenstand der Erfindung ist ein

Verfahren zur Verstärkung des Haftens von polymeren Stoffen, die organische Gruppen enthalten oder aus solchen Gruppen aufgebaut sind oder von organische Gruppen enthaltenden Stoffen, die zu Polymeren vernetzbar sind, auf alkalianorganisches Carbonat enthaltenden Oberflächen, wobei bevor polymerer bzw. zu Polymer vernetzbarer Stoff der vorstehend definierten Art in Berührung mit der Erdalkalicarbonat enthaltenden Oberfläche, auf der er stärker haften soll, gebracht wird, auf diese Carbonat enthaltenden Oberfläche eine Lösung einer Phosphorverbindung aufgetragen und dann das Lösungsmittel entfernt wird, dadurch gekennzeichnet, daß die Phosphorverbindung eine Phosphorsäure oder eine Phosphor enthaltende Organosiliciumverbindung mit mindestens einer Gruppe der Formel

$$RSiOP=O \ ,$$

worin R einen SiC-gebundenen, einwertigen, gegebenenfalls substituierten Kohlenwasserstoffrest bedeutet, aufweist und daß das Lösungsmittel organisch und aprotisch ist.

Bei den Carbonat enthaltenden Oberflächen, auf denen durch das erfindungsgemäße Verfahren das Haften von polymeren Stoffen, die organische Gruppen enthalten, oder aus solchen Gruppen aufgebaut sind bzw. von organischen Gruppen enthaltenden Stoffen, die zu Polymeren vernetzbar sind, verstärkt wird, handelt es sich um Oberflächen von Feststoffen, und zwar vorzugsweise um solche, die Erdalkalicarbonat enthalten, insbesondere die von von carbonatischen oder calcitischen Natursteinen, Kunststeinen, Sanden und Kiesen oder diejenige von pulver- oder faserförmigem Carbonat, wie Füllstoffen und Pigmenten. Insbesondere sind dies die Oberflächen von Magnesiumcarbonat, Calciumcarbonat, z.B. Muschelkalk oder Marmor, Dolomit, Calcit, Strontiumcarbonat, Bariumcarbonat, von Gemischen aus mindestens zwei derartiger Carbonate, weiterhin z.B. von Carbonat enthaltenden Steinen, wie natürlichen oder künstlichen Kalksandsteinen, Nagelfluh oder Quelltuffen, Beton, Kalkmörtel oder Kalkputzen. Es kann sich auch um Pigmente handeln, wie um kalkhaltigen Ocker. Beispiele für Carbonat enthaltende Oberflächen, welche kein Erdalkalicarbonat enthalten, sind die von (Halb-) Edelsteinen wie Malachit, von Pigmenten wie Bleicarbonat, Mineralien, wie Manganspat, Zinkspat, Eisenspat, Kupferlasur und Cadmiumspat, sowie um Patina, insbesondere solche von Kupfer und seinen Legierungen.

Die Carbonat enthaltende Oberflächen können porös und/oder rauh sein, wie diejenigen von Kalksandsteinen, oder glatt und zumindest praktisch frei von Poren sein, wie diejenigen von poliertem Marmor. Die Carbonat enthaltenden Oberflächen können z.B. diejenigen von Pulvern oder Mehlen sein, wie sie z.B. bei Füllstoffen, wie gemahlener Kreide oder anderem als Füllstoff geeignetem Calciumcarbonat, z.B. feinteiligem, nadelförmigen Calciumcarbonat vorliegen, oder diejenigen von größeren Gebilden sein, wie von Blöcken, Platten oder Fassaden. Bevorzugt als Carbonat enthaltende Oberflächen sind diejenigen von Marmor.

Es ist bevorzugt, daß die zu behandelnde, Carbonat enthaltende Oberfläche die Oberfläche eines Stoffes ist, welcher zu mindestens 50%, vorzugsweise zu mindestens 80 %, bezogen auf sein Gewicht, aus Carbonat besteht.

Eine wichtige Gruppe von erfindungsgemäß verwendbarem, Phosphor enthaltenden Organosiliciumverbindungen sind solche der Formel

$$(RR_2^1SiO)_3P=O \;,$$

worin R die oben dafür angegebene Bedeutung hat und $R^1$ gleiche oder verschiedene, SiC-gebundene, einwertige, gegebenenfalls substituierte Kohlenwasserstoffreste, 1 bis 4 Kohlenwasserstoffatom(e) je Rest aufweisende Alkoxy- oder Alkoxyalkylenoxyreste, Reste der Formel

$$R_3SiO_{1/2} \;,$$

worin R die oben dafür angegebene Bedeutung hat, oder aus 2 bis 10 Siloxaneinheiten der Formel

$$RSiO_{3/2}, R_2SiO \text{ oder } SiO_{4/2} \;,$$

wobei R die oben dafür angegebene Bedeutung hat, oder einem Gemisch aus mindestens zwei derartiger Siloxaneinheiten und gegebenenfalls Einheiten der Formel

$$R_3SiO_{1/2} \;,$$

wobei R ebenfalls die oben dafür angegebene Bedeutung hat, aufgebaute Reste bedeutet.

Eine weitere wichtige Gruppe von erfindungsgemäß verwendbaren, Phosphor enthaltenden Organosiliciumverbindungen sind 0,005 bis 0,33 Phosphoratome je Siliciumatom in diesen Organosiliciumverbindungen enthaltende Umsetzungsprodukte von Silan der Formel

$$RSi(OR^2)_3 \;,$$

worin R wieder die oben dafür angegebene Bedeutung hat und $R^2$ gleiche oder verschiedene Alkyl- oder Alkoxyalkylenreste mit jeweils höchstens 4 Kohlenstoffatomen je Rest bedeutet, oder dessen höchstens 15 Siliciumatome je Molekül enthaltenden Teilhydrolysaten mit Orthophosphorsäure, phosphoriger Säure oder Phosphorpentoxyd oder einem Gemisch aus mindestens zwei dieser Phosphorverbindungen. Dabei ist als Phosphorverbindung Orthophosphorsäure besonders bevorzugt.

Zusätzlich zu erfindungsgemäß verwendeter, Phosphor enthaltender Organosiliciumverbindung können die erfindungsgemäß verwendeten Lösungen gegebenenfalls mindestens eine von Phosphor freie organische Siliciumverbindung enthalten. Beispiele für solche weiteren Siliciumverbindungen sind insbesondere solche der Formel

$$R_aSi(OR^2)_{4-a} \;,$$

worin R und $R^2$ jeweils die oben dafür angegebene Bedeutung haben und a 0, 1, 2 oder 3, durchschnittlich 0,0 bis 1,8 ist, und deren höchstens 15 Siliciumatome je Molekül enthaltende Teilhydrolysate.

Es ist bevorzugt, daß die Lösung als von Phosphor freie organische Siliciumverbindung Phenyltriethoxysilan enthält.

Vorzugsweise enthalten die erfindungsgemäß verwendeten Lösungen 0,5 bis 33 Gruppen der Formel

$$RSiOP=O$$

je 100 der in diesen Lösungen vorliegenden Siliciumatome.

Vorzugsweise enthalten die SiC-gebundenen organische Reste in den erfindungsgemäß verwendeten Organosiliciumverbindungen und damit derartiger Reste R und $R^1$ in den oben angegebenen Formeln höchstens 18 Kohlenstoffatome je Rest. Beispiele für Kohlenwasserstoffreste als SiC-gebundene organische Reste in den erfindungsgemäß verwendeten organischen Siliciumverbindungen und damit für Kohlenwasserstoffreste R und $R^1$ in den oben angegebenen Formeln sind Alkylreste, wie der Methyl-, Ethyl-, n-Propyl-, Isopropyl- und 2-Ethylhexylrest sowie Octadecylreste; Kohlenwasserstoffreste mit mindestens einer aliphatischen Doppelbindung, wie der Vinyl-, Allyl-, Ethylallyl- und Butadienylrest, sowie Cyclohexenylreste; Cycloalkylreste, wie der Cyclohexylrest und Methylcyclohexylreste, Arylreste, wie der Phenylrest; Alkarylreste, wie Tolylreste; und Aralkylreste, wie der Benzylrest.

Beispiele für substituierte Kohlenwasserstoffreste als SiC-gebundene organische Reste in den erfindungsgemäß verwendeten organischen Siliciumverbindungen und damit für derartige Reste R und $R^1$ in den oben angegebenen Formeln sind halogenierte Kohlenwasserstoffreste, wie durch Fluoratome substituierte Alkylreste, z.B. der 3,3,3-Trifluorpropylrest sowie Chlorphenylreste, Acyloxyalkylreste, wie der 3-Methacryloxypropylrest, und Cyanalkylreste, wie der beta-Cyanethylrest.

Beispiele für Alkylreste $R^2$ sind der Methyl-, Ethyl-, n-Propyl-, Isopropyl-, n-Butyl-, sec.-Butyl- und tert.-Butylrest. Das wichtigste Beispiel für einen Alkoxyalkylenrest $R^2$ ist der beta-Methoxyethylenrest.

Die Herstellung von Verbindungen der Formel

$$(RR_2^1SiO)_3P=O \;,$$

worin R und $R^1$ die oben dafür angegebene Bedeutung haben, ist z.B. aus GB 16 04 360 (ausgegeben 9. Dez. 1981, J.S. Razzano et al., General Electric Company) bekannt.

Die Herstellung von Umsetzungsprodukten von Silanen der Formel

$$RSi(OR^2)_3$$

worin R und $R^2$ die oben dafür angegebene Bedeutung haben, oder deren Teilhydrolysaten mit Orthophosphorsäure, Phosphoriger Säure oder Phosphorpentoxyd oder deren Gemischen ist z.B. aus US 3 767 432 (ausgegeben 23. Oktober 1973, I.M. Thomas, Owens-Illinois, Inc.) bekannt.

Als Organosiliciumverbindung der Formel

$$(RR_2^1SiO)_3P=O$$

ist Tris-(trimethylsiloxy)-phosphat besonders bevorzugt.

Als Umsetzungsprodukte von Silanen der Formel

$$RSi(OR^2)_3$$

mit Orthophosphorsäure sind Umsetzungsprodukte von Phenyltriethoxysilan mit Orthophosphorsäure besonders bevorzugt.

Einzelne Beispiele für von Phosphor freie organische Siliciumverbindungen, die zusätzlich zu Phosphor enthaltender Organosiliciumverbindung in den erfindungsgemäß verwendeten Lösungen vorliegen können, sind Methyltrimethoxysilan, Phenyltriethoxysilan, Tetramethoxysilan, Tetraethoxysilan und 3-Methacryloxypropyltrimethoxysilan.

Als organische aprotische Lösungsmittel sind polare organische, aprotische Lösungsmittel bevorzugt. Unter diesen polaren Lösungsmitteln sind wiederum Essigsäureester von 1 bis 4 Kohlenstoffatome je Molekül aufweisenden Alkanolen, insbesondere Essigsäureethylester, besonders bevorzugt. Weitere Beispiele für im Rahmen des erfindungsgemäßen Verfahrens verwendbare polare, organische, aprotische Lösungsmittel sind Chlorkohlenwasserstoffe, wie Methylenchlorid, 1,2-Dichlorethan, 1,1,1-Trichlorethan, 1,2-Dichlorethan, 1,1,2-Trichlorethylen, Perchlorethylen und Chlorbenzol; Ketone, wie Methylethylketon und Cyclohexanon; sowie Ether, wie Di-sec.-butylether.

Es kann eine Art von organischem Lösungsmittel verwendet werden. Es können aber auch Gemische aus mindestens zwei verschiedenen Arten derartiger Lösungsmittel verwendet werden.

Vorzugsweise enthalten die erfindungsgemäß verwendeten Lösungen 0,001 bis 0,15, bevorzugter 0,003 bis 0,05, insbesondere 0,005 bis 0,03 Grammatom Phosphor, der in den erfindungsgemäß verwendeten, Phosphor enthaltenden Organosiliciumverbindungen vorliegt, je 100 g ihres Gesamtgewichts.

Vorzugsweise sind die Carbonat enthaltenden Oberflächen vor dem Auftragen der erfindungsgemäß verwendeten Lösungen frei von fettartigen Stoffen und anderen Verunreinigungen, wie Staub. Vor dem Auftragen der erfindungsgemäß verwendeten Lösungen können die Carbonat enthaltenden Oberflächen trocken oder, weil auf ihnen Wasser oder Lösungsmittel adsorbiert ist, feucht sein. Vorzugsweise sind sie etwas feucht, weil auf ihnen Wasser adsorbiert ist.

Das Auftragen der erfindungsgemäß verwendeten Lösungen auf die damit zu behandelnden Carbonat enthaltenden Oberflächen kann in beliebiger für das Auftragen von Lösungen in aprotischem organischem Lösungsmittel auf Oberflächen von normalerweise festen Stoffen geeigneter Weise, z.B. durch Aufsprühen, Gießen, Streichen, Walzen oder Tauchen bzw. durch Vermischen mit Carbonat enthaltendem Pulver oder Mehl, erfolgen.

Die Entfernung von Lösungsmittel von mit erfindungsgemäß verwendeter Lösung behandelter Carbonat enthaltender Oberfläche, bevor diese mit polymerem oder zu Polymer vernetzbarem Stoff, dessen Haften auf dieser Oberfläche verstärkt werden soll, in Berührung gebracht wird, kann durch Verdunsten lassen oder Verdampfen des Lösungsmittels erfolgen.

Bei den polymeren Stoffen, die organische Gruppen enthalten oder aus solchen Gruppen aufgebaut sind und mit den mit erfindungsgemäßer Lösung vorbehandelten Carbonat enthaltende Oberflächen nach dem Entfernen des Lösungsmittels von diesen Oberflächen in Berührung gebracht werden, kann es sich um beliebige polymere Stoffe handeln, die organische Gruppen enthalten oder aus solchen Gruppen bestehen, mit denen auch bisher Carbonat enthaltende Oberflächen überzogen oder imprägniert würden oder in deren auch bisher Carbonate als Füllstoffe oder Verstärkungsmittel vorliegen konnten. Dabei können sich die polymeren Stoffe auch aus niedermolekularen Stoffen, wie Methyltriethoxysilan, erst nach der Berührung mit der Carbonat enthaltende Oberfläche bilden.

Bevorzugte Beispiele für polymere Stoffe, die organische Gruppen enthalten oder aus solchen Gruppen aufgebaut sind und mit den mit erfindungsgemäß verwendeter Lösung vorbehandelten Carbonat enthaltende Oberflächen nach dem Entfernen des Lösungsmittels von diesen Oberflächen in Berührung gebracht werden können, sind solche, die zumindest teilweise aus sich von Alkylester oder Amiden der Acrylsäure oder Methacrylsäure ableitenden Einheiten und gegebenenfalls sich von Acryloxyalkylsilanen, insbesondere 3-Acryloxypropylsilanen, wie 3-Acryloxypropyltrimethoxysilan, und/oder Methacryloxyalkylsilanen, insbesondere 3-Methacryloxypropylsilanen, wie 3-Methacryloxypropyltrimethoxysilan, ableitenden Einheiten aufgebaut sind.

Weitere Beispiele für polymere Stoffe, die aus organischen Gruppen aufgebaut sind und mit den mit erfindungsgemäß verwendeter Lösung vorbehandelten Carbonat enthaltenden Oberflächen nach dem Entfernen des Lösungsmittels von diesen Oberflächen in Berührung gebracht werden können bzw. für niedermolekulare Stoffe, aus denen sich derartige Polymere auf diesen Oberflächen bilden können, sind Organoalkoxysilane, außer dem bereits genannten Methyltriethoxysilan z.B. Phenyltriethoxysilan, oder deren Teilhydrolysate oder thermoplastische oder duroplastische Organopolysiloxane, einschließlich Organopolysiloxanelastomeren, Epoxyharze, Polyester und Polyamide.

Auf die erfindungsgemäß vorbehandelten Carbonat enthaltenden Oberflächen kann eine Schicht von polymerem Stoff aufgetragen bzw. auf diesen Oberflächen erzeugt werden. Auf die erfindungsgemäß vorbehandelten Carbonat enthaltende Oberflächen könnnen aber auch mindestens zwei Schichten aus gleichem oder verschiedenem polymerem Stoff aufgetragen bzw. auf diesen Oberflächen erzeugt werden.

Die polymeren Stoffe, die aus organischen Gruppen aufgebaut sind oder solche Gruppen enthalten bzw. die zu Polymeren vernetzbar sind, können auf die mit erfindungsgemäß verwendeter Lösung vorbehandelten Carbonat enthaltender Oberflächen nach dem Entfernen des Lösungsmittels von diesen Oberflächen in beliebiger Weise in Berührung gebracht werden, in der polymere Stoffe der vorstehend definierten Art auch bisher in Berührung mit Oberflächen gebracht werden konnten, z.B. durch Vermischen von aus Carbonat bestehenden oder Carbonat enthaltenden, erfindungsgemäß vorbehandelten Füllstoffen mit derartigen polymeren Stoffen oder durch Auftragen derartiger polymerer Stoffe auf die zu überziehenden Oberflächen, z.B. durch Streichen, Sprühen, Gießen, Walzen oder Tauchen. Dabei können die polymeren Stoffe in unverdünnter Form, soweit ihre Viskositat dies zuläßt, oder in Form von Lösungen oder Dispersionen angewandt werden.

Das erfindungsgemäße Verfahren eignet sich hervorragend zur Verstärkung des Haftens von Bautenschutzmitteln, beispielsweise Steinfestigern, vorzugsweise solchen auf der Basis von Kieselsäureestern, insbesondere Tetramethylsilicat, Tetraethylsilicat (Tetraethoxysilan) und deren Teilhydrolysaten auf Carbonat enthaltendem Kunst- oder Naturstein. Es eignet sich auch zur Verstärkung des Haftens des Bindemittels bei der Herstellung von anorganisches Carbonat enthaltendem Kunststein. Bei diesen Anwendungen ist es oft vorteilhaft, auf die erfindungsgemäß vorbehandelten Oberflächen ein Gemische von Kieselsäureestern und/oder deren Teilhydrolysaten mit Siliconharzen aufzubringen. Die erwähnten Bautenschutzmittel bzw. Bindemittel auf der Basis von Kieselsäureester werden vorzugsweise in Lösungsmitteln, insbesondere in organischen Lösungsmitteln gelöst bzw. dispergiert, auf die vorbehandelten Oberflächen aufgebracht. Als solche Lösungsmittel sind Alkohole, insbesondere Methanol, Ethanol, n-Propanol, i-Propanol, n-Butanol, sec.-Butanol, tert.-Butanol, Pentanole, Hexanole; Aromaten, insbesondere Toluol, m-, o- und p-Xylol; Ketone, insbesondere Aceton, Methylethylketon, Methylisobutylketon, Methyl-n- oder -i-propylketon; Ester, insbesondere Methylacetat, Ethylacetat, n-Propylacetat, i-Propylacetat, n-, sec.- und tert.-Butylacetat; sowie Gemische der vorgenannten Lösungsmittel. Für weitere Details bezüglich der verwendbaren Bautenschutzmittel und deren Anwendung sei auf US-PS 3 955 988 und CA-PS 1 128 685 (jeweils M. Roth et al., Wacker-Chemie GmbH) verwiesen.

Selbstverständlich kann das erfindungsgemäße Verfahren auch auf nicht Carbonat enthaltenden Kunst- oder Natursteinoberflächen durchgeführt werden.

In den folgenden Beispielen beziehen sich alle Angaben von Teilen und Prozentsätzen auf das Gewicht, soweit nichts anderes angegeben ist.

Beispiele 1 bis 5

Bei jedem der in der folgenden Tabelle I bezifferten Beispiele wird jeweils 1g einer Lösung aus
5% Tris-(trimethylsiloxy)-phosphat, 5% Phenyltriethoxysilan und 90% Essigsäureethylester (Beispiele 1 und 5)
2,5% Tris-(trimethylsiloxy)-phosphat, 5% Phenyltriethoxysilan und 92,5% Essigsäureethylester (Beispiel 2)
10% Tris-(trimethylsiloxy)-phosphat, 5% Phenyltriethoxysilan und 85% Essigsäureethylester (Beispiel 3)
5% Tris-(trimethylsiloxy)-phosphat, 10% Phenyltriethoxysilan und 85% Essigsäureethylester (Beispiel 4)
auf 100 cm² große Oberflächen von polierten Platten der in Tabelle I angegebenen Gesteinsart aufgetragen, die vorher mit von Fremddionen befreitem Wasser gespült und eine Stunde bei Raumtemperatur stehen gelassen wurden, sodaß sie beim Auftragen der Lösung noch feucht sind.

Dann werden die Platten 4 Stunden bei Raumtemperatur stehengelassen, um das Lösungsmittel durch Verdunsten zu entfernen. Danach wird auf die so vorbehandelten Erdalkalicarbonat enthaltende Oberflächen ein handelsüblicher Lack auf Grundlage eines Mischpolymerisats von Methacrylsäuremethylester und Methacrylsäureethylester ("Paraloid B 72", wobei die Bezeichnung "Paraloid" ein Registriertes Warenzeichen ist, der Fa. Rohm & Haas Co., Philadelphia, PA., USA) aufgetragen. Die Bewertung der Stärke des Haftens der Beschichtung auf der Calciumcarbonat-oberfläche erfolgt durch Gitterschnittprüfung nach DIN (Deutsche Industrie Norm) 53 151 vom Mai 1981. Dabei ist die Stärke des Haftens der Beschichtung bei einem Gitterschnitt-Kennwert von 0 am höchsten. Je höher der Gitterschnitt-Kennwert ist, desto schwächer ist das Haften der Beschichtung auf der Unterlage.

## Tabelle I

| Beispiel bzw. Vergleichsversuch | Gesteinsart | Herkunft | Gitterschnitt-Kennwert Gt | | |
|---|---|---|---|---|---|
| | | | 1) | 2) | 3) |
| a[4]) | Marmor | Jura | 2-3 | 3 | +++) |
| 1 | " | " | 0 | 0 | 0 |
| 2 | " | " | 0 | 0 | 0 |
| 3 | " | " | 0 | 0 | +) |
| 4 | " | " | 0 | 0 | 0 |
| b[4]) | Muschelkalk | " | 0-1 | 1 | +++) |
| 5 | " | " | 0 | 0-1 | 0-1 |

1) nachdem der Lack trocken geworden ist

2) nach 16 Stunden Lagerung bei Raumtemperatur unter mit Wasser gesättigter und 20 g Schwefeldioxyd je 50 l bei 20°C und 1000 hPa (abs.) enthaltender Luft

3) nach 16 Stunden Lagerung unter 6% Schwefeldioxyd enthaltendem Wasser

4) Vergleichsversuche, d.h. ohne Vorbehandlung des Marmors

+) Lack löst sich teilweise von der Unterlage ab, ohne daß der Marmor bzw. Muschelkalk angegriffen ist

++) die Oberfläche des Marmors bzw. Muschelkalks ist geringfügig angegriffen

+++) stark verätzte Marmoroberfläche

Beispiele 6 bis 9

Bei jedem der in der folgenden Tabelle II bezifferten Beispiele wird jeweils 1 g einer Lösung aus 5% Tris-(trimethylsiloxy)-phosphat, 5% Phenyltriethoxysilan und 90% Essigsäureethylester (Beispiel 6, 8 und 9) bzw. 10% eines Umsetzungsprodukts von Phenyltriethoxysilan mit Orthophosphorsäure und 90% Essigsäureethylester (Beispiel 7),wobei dieses Umsetzungsprodukt von Phenyltriethoxysilan mit Orthophosphorsäure durch Erwärmen eines Gemisches aus 88 Teilen Phenyltriethoxysilan, 12 Teilen wasserfreier Orthophosphorsäure und 500 Teilen Toluol zum Sieden unter Rückfluß, bis in einer Dean-Stark-Falle die Ethanolmenge gleich blieb, was etwa 8 Stunden erforderte, Abdestillieren des Toluols und Lösen des Rückstands in Essigsäureethylester hergestellt wurde, auf 100 cm² große Oberflächen von polierten Platten der in Tabelle II angegebenen Gesteinsart aufgetragen, die vorher mit von Fremdionen befreitem Wasser gespült und eine Stunde bei Raumtemperatur stehen gelassen wurden, sodaß sie beim Auftragen der Lösung noch feucht sind.

Dann werden die Platten 4 Stunden bei Raumtemperatur stehen gelassen, um das Lösungsmittel durch Verdunsten zu entfernen. Dann wird auf die so vorbehandelten Erdalkalicarbonat enthaltende Oberfläche n ein handelsüblicher Lack auf Grundlage eines Mischpolymerisats aus 86% Methacrylsäuremethylester, 12% Acrylsäure-2-hydroxyethylester und 2% 3-Methacryloxypropyltrimethoxysilan aufgetragen. Die Bewertung der Stärke des Haftens der Beschichtung auf der Calciumcarbonatoberfläche erfolgt wie in Beispiel 1 beschrieben.

## Tabelle II

| Beispiel bzw. Vergleichsversuch | Gesteinsart | Herkunft | Gitterschnitt-Kennwert Gt | | |
|---|---|---|---|---|---|
| | | | 1) | 2) | 3) |
| c[4]) | Marmor | Botticino | 1-2 | 2 | +++) |
| 6 | " | " | 1 | 1 | 2 |
| 7 | " | " | 0 | 0 | +) |
| d[4]) | Muschelkalk | Jura | 1-2 | 1-2 | +++) |
| 8 | " | " | 0-1 | 0-1 | 0-1 |
| e[4]) | Marmor | Carrara | 2-3 | 4 | ++) |
| 9 | " | " | 2-3 | 2-3 | 2-3 |

1) bis 4)   gleiche Bedeutung wie bei Tabelle I
+) bis +++)   gleiche Bedeutung wie bei Tabelle I

Beispiele 10 bis 12

In den folgenden Beispielen wurden erfindungsgemäß beschichtete pulverförmige Kreide (Beispiele 10 bis 13) bzw. käufliche unbehandelte oder mit Stearat behandelte Kreide (Vergleichsbeispiele f, g und h) als Füllstoffe in Kunststoffen eingesetzt.

Füllstoffe:

1) Vergleichsbeispiele g und h: Unbehandelte Kreide (Omyalite 90;mittlere Teilchengröße 1μm;Omya GmbH,5000 Köln)
2) Vergleichsbeispiel f: Mit Stearat beschichtete Kreide. (Omyalite 95T;mittlere Teilchengröße 1μm;Omya GmbH,5000 Köln)
3) Beispiele 10 und 12: Kreide (Omyalite 90) beschichtet mit $OP(OSi(CH_3)_3)_3$
4) Beispiele 11: Kreide (Omyalite 90) beschichtet mit $OP(OSi(CH_3)_3)_3$ und Phenyltrimethoxysilan.

Kunststoffrezeptur A:

Beispiele 10 und 11, Vergleichsbeispiele f und g:
100    Gewichtsteile Ethylen-Vinylacetat-Copolymer (Levapren 450 der Bayer AG, D-5090 Leverkusen)

40 Gewichtsteile Füllstoff wie oben angegeben
2 Gewichtsteile Triallylcyanurat
4 Gewichtsteile einer 40 Gew.%igen Lösung von Bis(t-butylperoxyisopropyl)benzol (Perkadox 14/40 der Akzo-Chemie, D-5160 Düren)
1 Gewichtsteil Stearinsäure

Kunststoffrezeptur B:

Beispiel 12, Vergleichsbeispiel h:

45 Gewichtsteile eines endständige Hydroxylgruppen aufweisenden Polydimethylsiloxans einer Viskosität von 80 mm$^2$/s bei 25° (FD 80 der Wacker-Chemie GmbH, D-8000 München)
60 Gewichtsteile Füllstoff wie oben angegeben
7 Gewichtsteile hochdisperse Kieselsäure einer BET-Oberfläche von 150 m$^2$/g
30 Gewichtsteile Siliconöl (AK 100 der Wacker-Chemie GmbH, D-8000 München
7,5 Gewichtsteile Vernetzer auf Oximbasis (Vernetzer BO 30 der Wacker-Chemie GmbH)
0,15 Gewichtsteile Katalysator (Katalysator 41 der Wacker-Chemie GmbH, D-8000 München)

### Tabelle III: Kunststoffmischung A:

| Beispiel | Füllstoff | Reißfe- stigkeit in N/mm$^2$ | | Bruch- dehnung in % | | Weiterreiß- festigkeit in N/mm | Compres- sion set in % |
|----------|-----------|------|------|------|------|------|------|
| | | * | ** | * | ** | * | * |
| f | 2) | 6,55 | 0,99 | 420 | 120 | 6,7 | 13,2 |
| g | 1) | 8,68 | 1,20 | 428 | 150 | 7,6 | 13,2 |
| 10 | 3) | 8,17 | 1,65 | 414 | 138 | 8,2 | 11,5 |
| 11 | 4) | 8,48 | 1,67 | 430 | 136 | 7,6 | 11,9 |

..............................................................

* gemessen nach Lagerung bei Raumtemperatur
** gemessen nach sechstägiger Lagerung bei 140°C

### Tabelle IV: Kunststoffmischung B; Änderung der physikalischen Eigenschaften in % nach vierwöchiger Lagerung bei 70°C in Wasserdampf.

| Beispiel | Füllstoff | Änderung in % von | | | |
|----------|-----------|------|------|------|------|
| | | Shore A- Härte | Reißfe- stigkeit | Bruchdeh- nung | Modul bei 100% Dehnung |
| h | 1) | -42,9 | -54,8 | + 9 | -64,7 |
| 12 | 3) | -26,9 | -50 | +26 | -51,9 |

..............................................................

Beispiel 13, Vergleichsbeispiele i und j:

Herstellung von Kunststein:

Mischung A:

Mischung bestehend aus 2 Gewichtsteilen Dibutylzinndilaurat und 100 Gewichtsteilen einer Mischung eines Teilhydrolysats von Tetraethoxysilan mit einem $SiO_2$-Gehalt von 34 Gew.%.

Mischung B:

Eine 2 Gew.%ige Lösung einer Mischung aus 9 Gewichtsteilen Phenyltriethoxysilan und 1 Gewichtsteil Trimethylsilylphosphat in Aceton.

Mischung C:

Eine 2 Gew.%ige Lösung von Vinyltriethoxysilan in Aceton.

Herstellung der Formkörper:

Hundert Gewichtsteile eines gegebenenfalls wie nachstehend geschildert vorbehandelten Calcits einer Korngrößenverteilung von 0,1 bis 0,5 mm wurden mit 20 Gewichtsteilen Mischung A vermischt und in eine Ringform mit einem Durchmesser von 75 mm und einer Höhe von 10 mm gefüllt. Nach 4 Tagen wurde der so hergestellte Formkörper nochmals mit 10 Gewichtsteilen Mischung A und nach weiteren 14 Tagen schließlich mit 5 Gewichtsteilen Mischung A getränkt.

Vergleichsbeispiel i: Nicht vorbehandelter Calcit.

Beispiel 13: Der Calcit wurde 24 h bei 70 °C getrocknet, anschließend in Mischung B suspendiert, von der überschüssigen Mischung B dekantiert und bei Raumtemperatur getrocknet.

Vergleichsbeispiel j: Beispiel 13 wurde wiederholt mit der Abänderung, daß statt Mischung B Mischung C eingesetzt wurde.

Für jeweils acht gleichbehandelte Formkörper wurden die Haftzugfestigkeiten an einem Herion Fluidtronik[R] Meßgerät (Hersteller: Herion Werke KG, D-7012 Fellbach) mit Stempeln von 50 mm Durchmesser gemessen und die Durchschnittswerte dieser Messungen ermittelt. Folgende Resultate wurden erzielt:

## Tabelle V:

| Beispiel | Haftzugfestigkeit [N/mm$^2$] |
|---|---|
| Vergleichsbeispiel i | 0,019 |
| Vergleichsbeispiel j | 0,021 |
| Beispiel 13 | 0,038 |

## Patentansprüche

1. Verfahren zur Verstärkung des Haftens von polymeren Stoffen, die organische Gruppen enthalten oder aus solchen Gruppen aufgebaut sind oder von organische Gruppen enthaltenden Stoffen, die zu Polymeren vernetzbar sind, auf anorganisches Carbonat, vorzugsweise Erdalkalicarbonat, enthaltenden Oberflächen, wobei bevor polymerer bzw. zu Polymer vernetzbarer Stoff der vorstehend definierten Art in Berührung mit der anorganisches Carbonat enthaltenden Oberfläche, auf der er stärker haften soll, gebracht wird, auf diese anorganisches Carbonat enthaltenden Oberfläche eine Lösung einer Phosphorverbindung aufgetragen und dann das Lösungsmittel entfernt wird, dadurch gekennzeichnet, daß die Phosphorverbindung eine Phosphorsäure oder eine Phosphor enthaltende Organosiliciumverbindung mit mindestens einer Gruppe der Formel

$$RSiOP=O \,,$$

worin R einen SiC-gebundenen, einwertigen, gegebenenfalls substituierten Kohlenwasserstoffrest bedeutet, aufweist und daß das Lösungsmittel organisch und aprotisch ist.

2. Verfahren nach Anspruch 1, dadurch gekennzeichnet, daß die Phosphor enthaltende Organosiliciumverbindung solche der Formel

$$(RR^1_2SiO)_3P=O$$

ist, worin R die in Anspruch 1 dafür angegebene Bedeutung hat und $R^1$ gleiche oder verschiedene, SiC-gebundene, einwertige, gegebenenfalls substituierte Kohlenwasserstoffreste, 1 bis 4 Kohlenstoffatom(e) je Rest aufweisende Alkoxy- oder Alkoxyalkylenoxyreste, Reste der Formel

$$R_3SiO_{1/2},$$

worin R die in Anspruch 1 dafür angegebene Bedeutung hat, oder aus 2 bis 10 Siloxaneinheiten der Formel

$$RSiO_{3/2}, R_2SiO \text{ oder } SiO_{4/2},$$

worin R ebenfalls die in Anspruch 1 dafür angegebene Bedeutung hat, oder einem Gemisch aus mindestens 2 derartiger Siloxaneinheiten und gegebenenfalls Einheiten der Formel

$$R_3SiO_{1/2},$$

wobei R ebenfalls die in Anspruch 1 dafür angegebene Bedeutung hat, aufgebaute Reste bedeutet.

3. Verfahren nach Anspruch 1, dadurch gekennzeichnet, daß die Phosphor enthaltende Organosiliciumverbindung ein 0,005 bis 0,33 Phosphoratome je Siliciumatom in dieser Organosiliciumverbindung enthaltendes Umsetzungsprodukt von Silan der Formel

$$RSi(OR^2)_3,$$

worin R die in Anspruch 1 dafür angegebene Bedeutung hat und $R^2$ gleiche oder verschiedene Alkyl- oder Alkoxyalkylenreste mit jeweils höchstens 4 Kohlenstoffatomen je Rest bedeutet, oder dessen höchstens 15 Siliciumatome je Molekül enthaltenden Teilhydrolysaten mit Orthophosphorsäure ist.

4. Verfahren nach Anspruch 2, dadurch gekennzeichnet, daß die Phosphor enthaltende Organosiliciumverbindung Tris-(trimethylsiloxy)-phosphat ist.

5. Verfahren nach mindestens einem der Ansprüche 1 bis 4, dadurch gekennzeichnet, daß die Lösung zusätzlich zu Phosphor enthaltender Organosiliciumverbindung mindestens eine von Phosphor freie organische Siliciumverbindung enthält.

6. Verfahren nach Anspruch 5, dadurch gekennzeichnet, daß die von Phosphor freie organische Siliciumverbindung Phenyltriethoxysilan ist.

7. Verfahren nach mindestens einem der Ansprüche 1 bis 6, dadurch gekennzeichnet, daß die anorganisches Carbonat enthaltende Oberfläche diejenige von carbonatischen oder calcitischen Natursteinen, Kunststeinen, Sanden und Kiesen oder diejenige von pulver- oder faserförmigem anorganischem Carbonat, wie Füllstoffen oder Pigmenten, ist.

8. Verfahren nach mindestens einem der Ansprüche 1 bis 7, wobei die anorganisches Carbonat enthaltende Oberfläche die Oberfläche eines Stoffes ist, der zu mindestens zu 50 Gewichtsprozent aus Erdalkalicarbonat besteht.

9. Verfahren nach mindestens einem der Ansprüche 1 bis 8 wobei Natur- und/oder Kunststein gefestigt wird.

10. Verfahren nach mindestens einem der Ansprüche 1 bis 9, wobei die polymeren Stoffe, die organische Gruppen enthalten oder aus solchen aufgebaut sind beziehungsweise die organische Gruppen enthaltenden Stoffe, die zu Polymeren vernetzbar sind, Tetramethylsilikat, Tetraethylsilikat, deren Teilhydrolysate oder zu Polymeren vernetzbare Organosilane oder Polyorganosiloxane sind.


## Claims

1. Process for strengthening the adhesion of polymeric substances which contain organic groups or are made up of such groups, or substances containing organic groups which can be crosslinked to form polymers, to surfaces containing inorganic carbonate, preferably alkaline earth metal carbonate, in which process, before a polymeric substance or a substance which can be crosslinked to form a polymer, of the type defined above, is brought into contact with the surface containing inorganic carbonate to which it is to adhere more strongly, a solution of a phosphorus compound is applied to this surface containing inorganic carbonate and the solvent is then removed, characterised in that the phosphorus compound is a phosphorus acid or a phosphorus-containing organosilicon compound having at least one group of the formula

$$RSiOP=O,$$

in which R is an SiC-bonded, monovalent, substituted or unsubstituted hydrocarbon radical, and in that the solvent is organic and aprotic.

2. Process according to Claim 1, characterised in that the phosphorus-containing organosilicon compound has the formula

$$(RR^1_2SiO)\,_3P=O,$$

in which R is as defined in Claim 1 and the radicals $R^1$ are identical or different, SiC-bonded, monovalent, substituted or unsubstituted hydrocarbon radicals, alkoxy or alkoxyalkylenoxy radicals having 1 to 4 carbon atoms per radical, radicals of the formula

$$R_3SiO_{1/2},$$

in which R is as defined in Claim 1, or radicals made up of 2 to 10 siloxane units of the formula

$$RSiO_{3/2}, R_2SiO \text{ or } SiO_{4/2},$$

in which R is again as defined in Claim 1, or made up of a mixture of at least 2 such siloxane units and, if appropriate, units of the formula

$$R_3SiO_{1/2},$$

in which R is again as defined in Claim 1.

3. Process according to Claim 1, characterised in that the phosphorus-containing organosilicon compound is a reaction product of a silane of the formula

$$RSi(OR^2)_3,$$

in which R is as defined in Claim 1 and the radicals $R^2$ are identical or different alkyl or alkoxyalkylene radicals each having at most 4 carbon atoms per radical, or its partial hydrolysates containing at most 15 silicon atoms per molecule, with orthophosphoric acid, said reaction product containing 0.005 to 0.33 phosphorus atom per silicon atom in this organosilicon compound.

4. Process according to Claim 2, characterised in that the phosphorus-containing organosilicon compound is tris(trimethylsiloxy) phosphate.

5. Process according to at least one of Claims 1 to 4, characterised in that the solution contains at least one phosphorus- free organic silicon compound in addition to the phosphorus-containing organosilicon compound.

6. Process according to Claim 5, characterised in that the phosphorus-free organic silicon compound is phenyltriethoxysilane.

7. Process according to at least one of Claims 1 to 6, characterised in that the surface containing inorganic carbonate is that of natural stones containing carbonate or calcite, artificial stones, sands and gravels, or that of pulverulent or fibrous inorganic carbonate, such as fillers or pigments.

8. Process according to at least one of Claims 1 to 7, in which the surface containing inorganic carbonate is the surface of a substance consisting of alkaline earth metal carbonate to the extent of at least 50 percent by weight.

9. Process according to at least one of Claims 1 to 8 in which natural and/or artificial stone is consolidated.

10. Process according to at least one of Claims 1 to 9, in which the polymeric substances which contain organic groups or are made up of such groups, or the substances containing organic groups which can be crosslinked to form polymers, are tetramethyl silicate, tetraethyl silicate, their partial hydrolysates or organosilanes which can be crosslinked to form polymers or polyorganosiloxanes.

**Revendications**

1. Procédé pour renforcer l'adhérence de matières polymères, contenant des groupes organiques ou constituées de groupes de ce genre, ou encore de matières contenant des groupes organiques, réticulables pour donner des polymères, sur des surfaces contenant un carbonate minéral alcalin de préférence un carbonat d'un métal alcalino-terraux, auquel cas, avant de mettre la matière polymère ou la matière réticulable pour donner un polymère du type défini ci-dessus en contact avec la surface contenant un carbonate minéral alcalin, sur laquelle elle doit adhérer plus fortement, on applique sur cette surface contenant un carbonate une solution d'un composé du phosphore, puis on élimine le solvant, procédé caractérisé en ce que le composé du phosphore contient un acide phosphorique ou un composé organique du silicium contenant du phosphore et comportant au moins un groupe de formule :

$$RSiOP=O$$

dans laquelle R est un radical hydrocarboné monovalent éventuellement substitué, lié par liaison SiC, le solvant étant organique et aprotique.

2. Procédé selon la revendication 1, caractérisé en ce que le composé organique du silicium contenant du phosphore est un composé de ce genre ayant la formule :

$$(RR^1_2SiO)_3P=O$$

dans laquelle R a les significations données dans la revendication 1, et $R^1$ représente des radicaux hydrocarbonés identiques ou différents, monovalents, éventuellement substitués, liés par liaison SiC, des radicaux alcoxy- ou alcoxyalkylène-oxy comportant par radical 1 à 4 atomes de carbone, les radicaux de formule :

$$R_3SiO_{1/2}$$

dans laquelle R a les significations données dans la revendication 1, ou encore représente des radicaux constitués de 2 à 10 motifs siloxane de formule :

$$RSiO_{3/2}, R_2SiO \text{ ou } SiO_{4/2}$$

où R a les significations données dans la revendication 1, ou d'un mélange d'au moins deux motifs siloxane de ce genre et éventuellement de motifs de formule :

$$R_3SiO_{1/2}$$

où R une fois de plus a les significations données dans la revendication 1.

3. Procédé selon la revendication 1, caractérisé en ce que le composé organique du silicium contenant du phosphore est un produit de réaction, contenant de 0,005 à 0,33 atome de phosphore par atome de silicium dans ce composé organique du silicium, obtenu par la réaction, avec de l'acide phosphorique, d'un silane de formule :

$$RSi(OR^2)_3$$

dans laquelle R a les significations données dans la revendication 1, et $R^2$ représente des radicaux alkyle ou alcoxyalkylène identiques ou différents ayant chacun au plus 4 atomes de carbone, ou son produit d'hydrolyse partielle contenant au plus 15 atomes de silicium par molécule.

4. Procédé selon la revendication 2, caractérisé en ce que le composé organique du silicium contenant du phosphore est le tris(triméthylsiloxy)phosphate.

5. Procédé selon au moins l'une des revendications 1 à 4, caractérisé en ce que la solution contient, en plus du composé organique du silicium contenant du phosphore, au moins un composé organique du silicium ne contenant pas de phosphore.

6. Procédé selon la revendication 5, caractérisé en ce que le composé organique du silicium ne contenant pas de phosphore est le phényltriéthoxysilane.

7. Procédé selon au moins l'une des revendications 1 à 6, caractérisé en ce que la surface contenant un carbonate minéral est une surface de pierres naturelles, de pierres artificielles, de sables et de graviers, carbonatés ou calcités, ou la surface d'un carbonate minéral pulvérulent ou fibreux, par exemple de charges ou de pigments.

8. Procédé selon au moins l'une des revendications 1 à 7, dans lequel la surface contenant un carbonate minéral est la surface d'une matière constituée pour au moins 50 % en poids d'un carbonate d'un métal alcalino-terreux.

9. Procédé selon au moins l'une des revendications 1 à 8, dans lequel on renforce une pierre naturelle et/ou artificielle.

10. Procédé selon au moins l'une des revendications 1 à 9, dans lequel les matières polymères contenant des groupes organiques ou constituées de groupes de ce genre, ou encore les matières contenant des groupes organiques et pouvant être réticulées pour donner des polymères, sont le silicate de tétraméthyle,

**EP 0 405 095 B1**

le silicate de tétraéthyle, leurs produits d'hydrolyse partielle, ou encore des organosilanes ou polyorganosilanes réticulables pour donner des polymères.